# FASCICULE DE BREVET EUROPEEN

(11) **EP 2 513 740 B1**
(45) Date de publication et mention de la délivrance du brevet: **21.02.2018**
(21) Numéro de dépôt: 10807465.9
(22) Date de dépôt: 13.12.2010
(51) Int. Cl.: G06F 3/0481, G06F 1/16

(54) **PROCEDE DE RESTITUTION D'INFORMATIONS SUR UN ECRAN D'UN TERMINAL, DISPOSITIF, TERMINAL ET PROGRAMME D'ORDINATEUR CORRESPONDANTS**
VERFAHREN ZUR WIEDERHERSTELLUNG VON INFORMATIONEN AUF DEM BILDSCHIRM EINES ENDGERÄTS, ZUGEHÖRIGE VORRICHTUNG, ENDGERÄT UND COMPUTERPROGRAMM
METHOD FOR RESTORING INFORMATION ON A SCREEN OF A TERMINAL, AND CORRESPONDING DEVICE, TERMINAL, AND COMPUTER PROGRAM

(30) Priorité: 18.12.2009 FR 0959231
(43) Date de publication de la demande: 24.10.2012
(73) Titulaire: Orange, 75015 Paris (FR)
(72) Inventeur: LEDUNOIS, Valérie, F-35890 Laille (FR); CAZOULAT, Renaud, F-35000 Rennes (FR)
(74) Mandataire: Vidon Brevets & Stratégie
(86) Numéro de dépôt international: PCT/FR2010/052694
(87) Numéro de publication internationale: WO 2011/073557

(56) Documents cités:
- WO-A1-01/27735
- WO-A1-03/102796
- US-A1- 2009 179 914
- US-B1- 6 201 554

## Description

### 1 DOMAINE DE L'INVENTION

Le domaine de l'invention est celui de la navigation à travers des applications et des fichiers disponibles au sein de terminaux. Plus précisément l'invention concerne la navigation et la visualisation d'éléments, sous la forme d'une reproduction particulière sur un écran, notamment de taille réduite, par exemple pour des terminaux, tels que les téléphones mobiles ou les assistants personnels.

### 2 SOLUTIONS DE L'ART ANTERIEUR

La grande majorité des terminaux possède des caractéristiques techniques permettant de faire fonctionner de nombreuses applications. Ces caractéristiques permettent également d'embarquer des applications de plus en plus nombreuses : lecteurs multimédia, lecteurs de courriers électroniques, calendriers, agendas, réveils, lecteurs de documents, applications de connectivités, etc. Cependant les méthodes de navigation au sein de ces applications sont hétérogènes et complexes et il est souvent malaisé d'obtenir une information de manière simple, en particulier du fait de la taille réduite des écrans de terminaux.

De ce fait, les fabricants de terminaux proposent l'accès aux applications sous la forme de liste d'icônes ou de liste de textes descriptifs, voire des deux. Les applications sont généralement accessibles à l'issue d'un parcours dans les menus fonctionnels et des listes ou des pages d'éléments affichées sur les écrans des terminaux. La même démarche est utilisée pour la représentation des fichiers.

Le principe général retenu par tous les fabricants de terminaux est de proposer un 'bureau' où est disposé un ensemble d'icônes. Un bureau est une surface d'affichage ('de restitution') d'icônes d'applications. Le nombre d'icônes affiché est en général limité (par exemple neuf à douze). Quand le terminal possède beaucoup d'applications et de fichiers, l'utilisateur doit dans un premier temps naviguer à travers les icônes représentatives jusqu'à trouver celle qu'il cherche. Quand il sélectionne l'icône en question, le terminal lance l'application associée à l'icône sélectionnée et l'utilisateur peut alors avoir accès aux informations recherchées.

Par exemple, lorsque l'utilisateur souhaite accéder à une application de météorologie, il possède généralement sur le bureau du terminal une icône représentant une application qui fournit des données météorologiques. Lorsque l'utilisateur sélectionne cette icône sur son bureau, l'application est lancée et l'utilisateur peut accéder aux données météorologiques du jour, du lendemain, du surlendemain, etc. Les terminaux et les applications les plus récents affichent, en lieu et place d'une icône traditionnelle, directement les données météorologiques du jour.

Un deuxième exemple concerne une application dite d'information, donnant accès à des articles de presses en ligne. Une telle application est également accessible au travers d'une icône présente sur le bureau du terminal de communication. Lorsque l'utilisateur souhaite accéder à ces articles de presses en ligne, il sélectionne l'icône et lance l'application correspondante. Les terminaux et les applications les plus récents affichent, en lieu et place d'une icône traditionnelle, un titre abrégé d'un premier article.

Cependant, cette manière de procéder n'est pas sans poser des problèmes. En effet, de par la présentation sous la forme d'une icône, l'accès aux informations n'est pas facile : l'utilisateur doit obligatoirement lancer l'application pour pouvoir avoir accès aux informations. En fonction du contexte dans lequel le terminal est utilisé, le lancement de l'application peut ne pas être pratique ou possible.

Quoi qu'il en soit, le lancement de l'application requiert d'une part l'attention de l'utilisateur et d'autre part une action de celui-ci. Soit l'action de l'utilisateur est réalisée en sélectionnant manuellement une icône sur le bureau, soit l'action peut également être réalisée par une commande vocale du type « lancer météo ».

Cependant, il peut être malvenu de devoir lancer une application afin de visualiser des courriers électroniques reçus, par exemple lorsque l'utilisateur se trouve en pleine réunion.

En d'autres termes, le fonctionnement actuel des interfaces ne permet pas d'accéder directement et facilement aux informations qui sont fournies par les applications installées au sein des terminaux.

La demande de brevet WO01/27735 décrit un procédé de fonctionnement d'une interface d'utilisateur de dispositif portatif. La demande de brevet WO03/102796 divulgue une méthode de présentation d'un calendrier sous une forme tridimensionnelle. La demande de brevet US2009/179914 décrit un procédé de visualisation de données dissimulées dans une représentation tridimensionnelle.. Cependant, les solutions proposées dans ces demandes de brevet ne permettent pas de présenter des informations d'une application, sans lancer l'exécution de l'application de celle-ci, ce qui entraine une mise en oeuvre de cette application au sein du terminal et donc une consommation de ressources et d'énergie inutile.

### 3 RESUME DE L'INVENTION

L'invention ne présente pas ces inconvénients de l'art antérieur. En effet, l'invention concerne un procédé de restitution d'informations sur un écran d'un terminal comprenant un espace d'affichage sur lequel est affiché un objet graphique dans une représentation initiale.

Selon l'invention, un tel procédé comprend :
- une étape d'obtention d'au moins une donnée d'inclinaison dudit terminal par rapport à un plan de référence ;
- une étape de sélection d'au moins une information, parmi une pluralité d'informations à restituer, en fonction de ladite donnée d'inclinaison obtenue, délivrant au moins une information sélectionnée ;
- une étape de transformation de ladite représentation initiale en une représentation modifiée comprenant ladite au moins une information sélectionnée ;
- une étape de restitution de ladite représentation modifiée dudit objet graphique;
ladite représentation initiale comprend :
- une étape de détermination d'un nombre d'informations sélectionnées ;
- une étape de création d'un nombre équivalent d'ombres portées comprenant chacune une desdites informations sélectionnées ;
- une étape de superposition de ladite représentation initiale avec lesdites ombres portées préalablement créées, délivrant ladite représentation modifiée.
Ainsi, l'invention permet de combiner l'affichage d'un objet graphique initial, préalablement restitué sous une forme initiale sur un espace de représentation visuel du terminal, tel qu'un bureau, à au moins une information associée à cet objet graphique. Il est alors possible de visualiser au moins une information sans avoir à lancer manuellement une application associée à cet objet graphique initial.

Selon un mode de réalisation particulier, l'étape de transformation de ladite représentation initiale comprend :

Ainsi l'inclinaison du terminal entraîne la création d'un ombrage de l'objet graphique, lequel ombrage comprend au moins une ombre. Cette ombre comprend au moins une information complémentaire à afficher. Ainsi, l'utilisateur n'a pas la nécessité de lancer l'exécution de l'application à laquelle se réfère l'objet graphique pour obtenir des informations de la part de cette application. Il lui suffit d'incliner le terminal.

Selon une caractéristique particulière, ladite étape de sélection d'au moins une information comprend une étape de détermination d'un niveau d'information délivrant un nombre d'informations à sélectionner en fonction de ladite donnée d'inclinaison obtenue et d'au moins un paramètre prédéterminé.

Ainsi, il est possible de sélectionner plusieurs informations en fonction d'une donnée d'inclinaison du terminal, telle que par exemple l'angle d'inclinaison de ce dernier. Le nombre d'informations est une fonction de l'angle d'inclinaison et de paramètres. Ces paramètres peuvent être modifiés par l'utilisateur du terminal afin d'adapter la mise en oeuvre du procédé à des conditions ou à un usage particulier.

Selon une caractéristique particulière, ladite restitution de ladite représentation modifiée dudit objet graphique est mise en oeuvre durant une période temporelle prédéterminée.

Ainsi, il est possible de rebasculer le terminal parallèlement au plan de référence pour visualiser la représentation modifiée dudit objet graphique de manière plus confortable.

Selon un mode de réalisation particulier, ledit procédé comprend une étape de calcul d'une direction d'inclinaison dudit terminal en fonction de ladite au moins une donnée d'inclinaison dudit terminal par rapport audit plan de référence.

Ainsi, il est possible de savoir si le terminal est incliné vers la gauche, vers la droite et/ou vers le haut ou le bas par rapport au plan de référence. Il est donc possible d'adapter la sélection des informations en fonction du sens d'inclinaison du terminal.

Selon une caractéristique particulière, ladite direction d'inclinaison dudit terminal définit une direction temporelle de sélection de ladite au moins une information parmi ladite pluralité d'informations à restituer.

Cette direction temporelle permet de sélectionner des informations futures (par exemple les prévisions météorologiques des jours futurs) lorsque le terminal est incliné vers la gauche (et que l'ombre portée est par exemple projetée sur la droite de l'objet graphique). Lorsque le terminal est incliné vers la droite, direction temporelle permet de sélectionner soit des informations passées (par exemple les prévisions météorologiques des jours passés).

Selon une caractéristique particulière, ladite direction d'inclinaison dudit terminal définit un classement alphabétique de sélection de ladite au moins une information parmi ladite pluralité d'informations à restituer.

Dans un autre mode de réalisation, l'invention concerne un dispositif de restitution d'informations sur un écran d'un terminal, ledit terminal comprenant un espace d'affichage sur lequel est affiché un objet graphique dans une représentation initiale.

Selon l'invention un tel dispositif comprend :
- des moyens d'obtention d'au moins une donnée d'inclinaison dudit terminal par rapport à un plan de référence ;
- des moyens de sélection d'au moins une information, parmi une pluralité d'informations à restituer, en fonction de ladite donnée d'inclinaison, délivrant au moins une information sélectionnée ;
- des moyens de transformation de ladite représentation initiale en une représentation modifiée comprenant ladite au moins une information sélectionnée ;
- des moyens de restitution de ladite représentation modifiée dudit objet graphique;
les moyens de transformation de ladite représentation initiale comprenant :
- des moyens de détermination d'un nombre d'informations sélectionnées ;
- des moyens de création d'un nombre équivalent d'ombres portées comprenant chacune une desdites informations sélectionnées ;
- des moyens de superposition de ladite représentation initiale avec lesdites ombres portées préalablement créées, délivrant ladite représentation modifiée.
Un tel dispositif peut par exemple prendre la forme d'un microprocesseur, tel qu'un ASIC (de l'anglais pour « Application Specific Integrated Circuit »), qui est spécifiquement conçu pour interagir avec un inclinomètre ou un accéléromètre dont il pourra récupérer des données d'inclinaison.

L'invention concerne également un terminal de communication intégrant un dispositif de restitution tel que décrit précédemment.

Selon un autre aspect, l'invention concerne également un produit programme d'ordinateur caractérisé en ce qu'il comprend des instructions de code de programme pour la mise en oeuvre du procédé de restitution tel que décrit précédemment, lorsque ce programme est exécuté par un processeur.

### 4 LISTE DES FIGURES

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique du procédé de restitution de l'invention ;
- la figure 2 illustre un mode de réalisation de la restitution par ombrage sous l'objet graphique ;
- la figure 3 illustre un mode de réalisation de la restitution par réduction de l'objet graphique ;
- la figure 4 présente un terminal adapté à la mise en oeuvre du procédé de restitution selon un mode de réalisation particulier.

### 5 DESCRIPTION DETAILLEE DE L'INVENTION

### 5.1 Rappel du principe de l'invention

L'invention propose une nouvelle méthode d'accès aux informations fournies par les applications installées sur les terminaux de communications. Pour ce faire, dans au moins un mode de réalisation, on utilise un dispositif particulier qui est présent au sein du terminal : il s'agit d'un accéléromètre. Plusieurs types de terminaux disposent à ce jour d'un accéléromètre. Il s'agit d'un dispositif qui permet de mesurer l'accélération d'un objet. Certains accéléromètres permettent aussi d'assurer la fonction d'inclinomètre. Il est ainsi possible de déterminer l'inclinaison d'un terminal de communication qui embarque un accéléromètre. Cette détection de l'inclinaison est utilisée par exemple dans certains jeux pour simuler les déplacements d'un véhicule ou d'un personnage. La détection de l'inclinaison est également utilisée de façon ludique pour la présentation des icônes installées sur un espace d'affichage (communément appelé 'bureau'). Il n'a cependant pas été proposé de solution pour mettre en oeuvre les accéléromètres présents au sein des terminaux de façon à faciliter l'accès aux informations.

L'invention met en oeuvre une corrélation entre l'inclinaison du terminal par rapport à un plan de référence et un niveau d'information à afficher. Le plan de référence est le plan de visualisation, par l'utilisateur, de l'écran du terminal. Selon l'invention, les informations peuvent être affichées par niveau. Par exemple dans le cadre d'un agenda, un premier niveau d'information, appelé niveau d'information initial correspond à la date du jour. On appelle ce niveau d'information, niveau 0.

Dans le cas où le terminal n'est pas incliné, le niveau d'information initial correspond à un objet graphique associé à une application (s'il s'agit de la météo, une icône peut représenter le temps qu'il fait actuellement ; s'il s'agit d'un agenda, une icône peut afficher la date du jour ; s'il s'agit d'une application de réseau social, une icône peut représenter le nombre d'amis connectés au service de réseau social ; s'il s'agit d'une application de messagerie, une icône peut représenter le nombre de nouveaux messages dans une boite de réception, etc.).

L'invention permet de réaliser l'affichage d'informations complémentaires à cette information de niveau 0. En effet, il est fréquent que les informations soient disponibles sous la forme de listes. Ces listes d'informations sont généralement classées par date ou par objet, l'objet correspondant à un titre ou à un identifiant de l'information, pouvant par exemple être classé par ordre alphabétique.

Le niveau d'information suivant le niveau d'information 0, appelé niveau 1, correspond à une information dans la liste. L'information présente dans la liste prend bien évidemment une forme variable en fonction de la nature même de l'application à laquelle l'icône est associée. Pour la météo, il peut s'agir des prévisions météorologiques pour le lendemain. Pour l'agenda, il peut s'agir de la date du lendemain. Pour une application de réseau social, il peut s'agir d'un identifiant de l'ami qui a posté le dernier message concernant l'utilisateur du terminal. Pour une application de messagerie, il peut s'agir du sujet du dernier message reçu, etc.

Le niveau d'information suivant, appelé niveau 2, correspond à une information suivante dans la liste et ainsi de suite. Le même principe s'applique pour les informations précédentes : le niveau -1 correspond à l'information précédent l'information de niveau 0. Le niveau -2 correspond à l'information précédent l'information de niveau -1. On note immédiatement que l'information précédente n'a pas toujours de sens. Ainsi, dans le cas de l'information météorologique, l'information précédente, de niveau -1, correspond à la météo du jour précédent. Dans le cas d'une application de courrier électronique, il se peut qu'il n'y ait pas d'information précédente, et donc pas d'information de niveau -1.

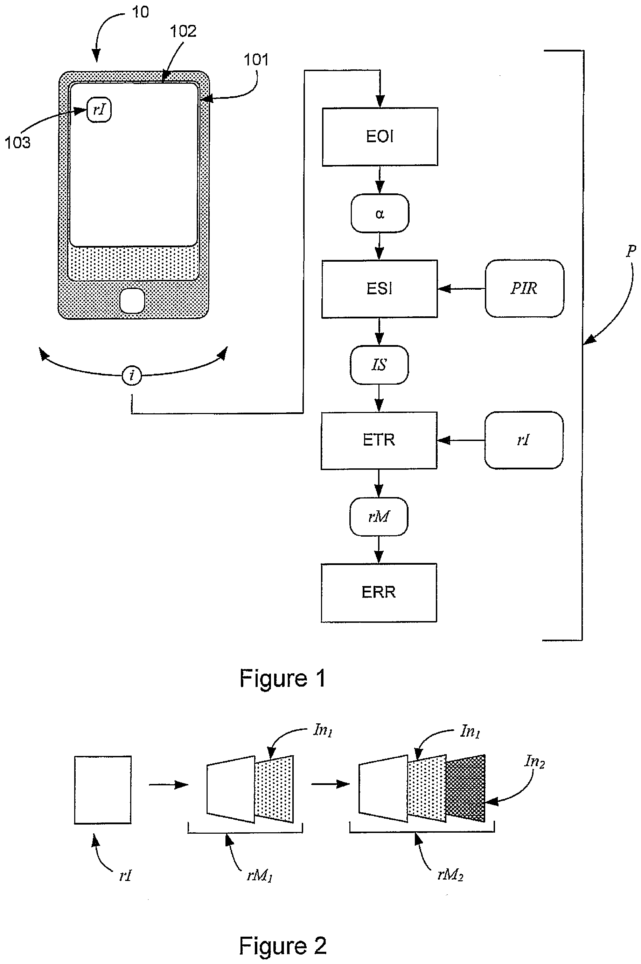

On décrit, en relation avec la figure 1, le procédé (P) de restitution d'informations de l'invention, sur un écran 101 d'un terminal 10, le terminal 10 comprenant un espace d'affichage 102 sur lequel est affiché un objet graphique 103 dans une représentation initiale *(rI)*, caractérisé en ce qu'il comprend :
- une étape d'obtention (EOI) d'une donnée d'inclinaison *(i)* dudit terminal par rapport à un plan de référence, délivrant par exemple un angle d'inclinaison *(α)* dudit terminal 10 ;
- une étape de sélection (ESI) d'au moins une information, parmi une pluralité d'informations à restituer (*PIR*)*,* en fonction dudit angle d'inclinaison *(α)*, délivrant au moins une information sélectionnée *(IS)* ;
- une étape de transformation (ETR) de ladite représentation initiale *(rI)* en une représentation modifiée *(rM)* comprenant ladite au moins une information sélectionnée *(IS)* ;
- une étape de restitution (ERR) de ladite représentation modifiée *(rM).*

La méthode proposée repose sur une mesure de l'inclinaison du terminal 10 qui permet de réaliser l'affichage d'une ou plusieurs informations de différents niveaux. Le principe, dans un mode de réalisation particulier, est de modifier la représentation de l'objet graphique 103 (comme par exemple une icône d'accès à une application), en y ajoutant par exemple une ombre portée dont la profondeur varie en fonction de l'inclinaison du terminal mobile par rapport à un plan de référence. La représentation modifiée comprend au moins une information complémentaire, correspondant à un niveau d'information déterminé (de niveau 1 ou -1 par exemple), à l'information initialement fournie, au niveau 0, par l'objet graphique.

Pour ce faire, dans ce mode de réalisation, l'accéléromètre du terminal est utilisé pour connaître le sens d'inclinaison de celui-ci, et par voie de conséquence de l'objet graphique pour afficher l'ombre de cet objet graphique et son contenu (c'est-à-dire l'information complémentaire) du bon côté. Si le terminal est incliné à gauche, l'ombre est affichée à la droite de l'objet graphique. Si le terminal est incliné à droite, l'ombre est affichée à la gauche de l'objet graphique. Si le terminal est incliné vers le sol, l'ombre est affichée en bas de l'objet graphique. Si le terminal est incliné vers le ciel, l'ombre est affichée en haut de l'objet graphique.

Par exemple, un objet graphique (comme une icône) affiche les prévisions météorologiques du jour. Selon un mode de réalisation, lorsque l'utilisateur incline le terminal vers la droite, l'ombre de l'objet, affichée sur un second plan, fournit les prévisions météo du lendemain.

La figure 2 divulgue un exemple de l'effet d'ombrage qu'il est possible d'obtenir en inclinant le terminal. Les objets graphiques se comportent comme si ils flottaient au dessus du fond graphique du terminal (ou collés sur la vitre de l'écran) et il est possible d'apercevoir leur ombre.

Lorsque le terminal n'est pas incliné par rapport au plan de référence, l'objet graphique est restitué dans sa représentation initiale *(rI).* Lorsque l'utilisateur incline le terminal, par exemple vers la gauche, la représentation initiale *(rI)* est transformée en une représentation modifiée *(rM₁)* comprenant une première information de niveau 1 *(In₁)* dans l'ombre de la représentation initiale. Lorsque l'utilisateur incline encore le terminal vers la gauche, la représentation initiale *(rI)* est transformée en une représentation modifiée *(rM₂)* comprenant une première information de niveau 1 *(In₁)* et une deuxième information de niveau 2 *(In₂*) située respectivement dans l'ombre de l'information de niveau supérieur. Les ombres sont ainsi successivement superposées les unes par-dessus les autres.

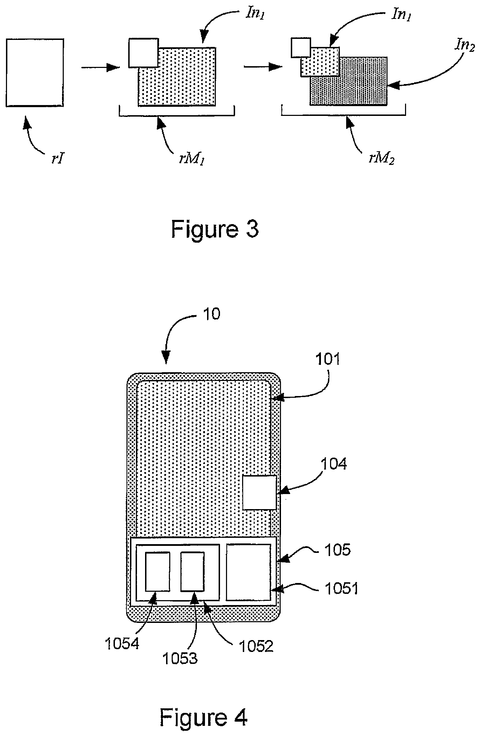

Le principe de l'invention n'est bien entendu pas limité à l'affichage d'une information complémentaire sous la forme d'une ombre d'un objet graphique affichée sur un espace d'affichage du terminal. En effet, en fonction de la taille de l'écran du terminal, il n'est pas forcément judicieux de souhaiter afficher une information complémentaire sous les objets graphiques, fussent-ils inclinés. Dans au moins un mode de réalisation, présenté en relation avec la figure 3, les inventeurs ont eu l'idée de proposer une réduction de l'objet graphique afin de permettre l'affichage de l'information de niveau 1.

Lorsque le terminal n'est pas incliné par rapport au plan de référence, l'objet graphique est restitué dans sa représentation initiale *(rI)*. Lorsque l'utilisateur incline le terminal, par exemple vers la gauche, la représentation initiale *(rI)* est transformée en une représentation modifiée *(rM₁)* comprenant une première information de niveau 1 *(In₁)* en réalisant une réduction de la représentation initiale pour faire apparaître la première information de niveau 1. Lorsque l'utilisateur incline encore le terminal vers la gauche, la représentation initiale *(rI)* est transformée en une représentation modifiée *(rM₂)* comprenant une première information de niveau 1 *(In₁)* et une deuxième information de niveau 2 *(In₂)*, en réalisant une réduction de la représentation initiale et de la première information de niveau 1 pour faire apparaître la deuxième information de niveau 2.

Par la suite, on présente notamment le cas d'une mise en oeuvre du procédé de restitution d'informations par l'intermédiaire de widgets. Les widgets sont des applications qui sont exécutées par un terminal et font partie des solutions imaginées pour faciliter l'accès à Internet depuis un tel terminal, par exemple un téléphone portable. Il est clair cependant que l'invention ne se limite pas à cette application particulière, mais peut également être mise en oeuvre dans de nombreuses autres configurations et plus généralement dans tous les cas où les avantages du procédé de restitution sont intéressants.

### 5.2 Description d'un mode de réalisation

On présente dans ce mode de réalisation, en relation avec la figure 4, un terminal 10 permettant une mise en oeuvre du procédé de restitution tel que présenté préalablement. Comme décrit en relation avec la figure 1, un terminal 10, comprenant un écran 101 utilisé pour réaliser la restitution des informations de différents niveaux, comprend également un accéléromètre 104 ainsi qu'un gestionnaire de widgets 105 (il s'agit donc d'un gestionnaire d'applications).

Le gestionnaire de widgets 105 comprend un moteur d'exécution 1051. Ce moteur d'exécution 1051 est chargé, pour un widget donné, par exemple un widget 1052, d'utiliser une description graphique 1053 et des instructions d'exécution 1054 pour afficher des données à l'écran. Le moteur d'exécution 1051 peut se charger de l'exécution de plusieurs widgets simultanément.

Dans ce mode de réalisation, les instructions d'exécution du widget comprennent des instructions pour l'obtention de valeurs d'inclinaison du terminal. Ces valeurs d'inclinaison sont obtenues par l'intermédiaire de l'accéléromètre 104.

Le widget 1052 utilise les valeurs transmises par l'accéléromètre 104 pour déterminer l'angle d'inclinaison du terminal par rapport au plan de référence. L'angle est ensuite utilisé pour déterminer le comportement du widget 1052, et notamment déterminer le nombre de niveaux d'informations à afficher (1, 2, 3, etc). Le widget 1052 récupère ensuite les informations en fonction du nombre de niveaux d'information à afficher. Ces informations peuvent soit être directement disponibles au sein du terminal, soit être obtenues auprès d'un serveur (non représenté) avec lequel le widget 1052 entre en contact sous la forme d'un échange de données de type 'requête-réponse'.

Le widget 1052 réalise ensuite une transformation de l'affichage de l'objet graphique, en utilisant pour ce faire les données de la description graphique 1053 en fonction des informations complémentaires à afficher. La transformation de l'affichage de l'objet graphique peut également être réalisée en fonction de paramètres spécifiquement sélectionnés par l'utilisateur, dont certains sont décrits par la suite.

Par exemple, selon un mode de réalisation particulier, non représenté, le nombre de niveaux d'information affiché est fonction de l'angle d'inclinaison du terminal. Par exemple, lorsque le terminal est incliné d'un angle variant entre 5° et 15° par rapport à l'horizontal, seule une information complémentaire est affichée. Lorsque le terminal est incliné d'un angle variant entre 15° et 45° par rapport à l'horizontal, deux informations complémentaires sont affichées. Lorsque le terminal est incliné d'un angle variant entre 45° et 75°, trois informations complémentaires sont affichées.

Ainsi, il est possible de faire varier le nombre d'informations complémentaires affichées en fonction de l'inclinaison du terminal. Cet affichage est particulièrement adapté lorsqu'il est progressif: au fur et à mesure de l'inclinaison, le nombre d'informations complémentaires affiché est incrémenté. Il est donc plus simple de visualiser une information de premier, puis de deuxième, puis de troisième niveau.

Bien entendu, les angles donnés ici sont paramétrables. De même, le nombre de niveaux d'informations à afficher est également paramétrable. Ainsi, l'utilisateur peut paramétrer le terminal pour qu'un seul niveau d'information soit affiché, quel que soit l'angle d'inclinaison.

Selon un mode de réalisation particulier, non représenté, lorsque le terminal est rebasculé en position horizontale, l'information ou les informations qui ont été dévoilées ne sont pas immédiatement effacées au profit de l'affichage de l'information initiale (par exemple l'icône de l'application). En effet, le degré de visibilité d'une information affichée sur un écran à cristaux liquide varie énormément en fonction de l'angle de vision. Ainsi, par exemple, lorsqu'un utilisateur regarde un écran de ce type avec un angle d'inclinaison trop important par rapport à un plan perpendiculaire au plan de référence du terminal, l'utilisateur n'est pas en mesure de voir correctement ce qui est affiché sur l'écran. Ainsi, l'information ou les informations restent visibles durant une période temporelle prédéterminée, par exemple quinze à vingt secondes, afin de permettre à l'utilisateur d'en prendre connaissance. Cette période temporelle est bien entendu paramétrable par l'utilisateur.

Selon une caractéristique particulière, la direction de l'inclinaison détermine une action particulière (droite, gauche, haut, bas). Par exemple l'inclinaison vers la droite ou la gauche du terminal peut déterminer une direction temporelle de l'information à afficher. Par exemple, dans le cadre d'une mise en oeuvre dans des zones régionales asiatiques, par exemple au japon, l'inclinaison à gauche du terminal entraîne la restitution d'informations futures. Il peut s'agir par exemple de la météo du lendemain ou du surlendemain. Dans le cadre d'une mise en oeuvre aux Etats-Unis ou en Europe, c'est l'inclinaison vers la droite qui entraîne la restitution d'informations futures.

Par exemple, dans le cas de la météo, une inclinaison vers la droite permet d'avoir accès à la météo du lendemain tandis qu'une inclinaison vers la gauche permet d'obtenir la météo du jour précédent. La direction de l'inclinaison (droite ou gauche) est donc utilisée pour réaliser une action particulière. La direction de l'inclinaison peut également être utilisée pour sélectionner un élément particulier (inclinaison vers le haut ou inclinaison vers le bas par rapport au plan de référence). Ainsi, il est possible de modifier un canal d'information ou de naviguer dans un ensemble de liste de choix.

En reprenant l'exemple des prévisions météorologiques, une inclinaison vers la gauche permet de sélectionner les prévisions pour les jours à venir et une inclinaison vers la droite permet de sélectionner les prévisions pour les jours passés. Les inventeurs ont eu l'idée d'améliorer ce principe en permettant une sélection de la ville à laquelle se rapporte la prévision météorologique en réalisant une inclinaison vers le haut ou vers le bas du terminal par rapport au plan de référence.

Selon une caractéristique particulière, lorsqu'un angle d'inclinaison maximum est atteint ou dépassé, le procédé comprend une étape de mise en rotation des informations affichées. Cette mise en rotation correspond à une mise en premier plan des informations qui étaient auparavant dans l'ombre de l'information de niveau 0. Plus particulièrement, cette rotation comprend une pluralité d'exécutions des étapes suivantes :
- mise à l'arrière plan de l'information qui était en premier plan ;
- mise au premier plan de l'information qui était au second plan ;
- montée d'un plan des autres informations affichées.

Cette rotation des informations peut se poursuivre tant que l'utilisateur n'a pas effectué une action pour la stopper. Ainsi, les informations défilent en lieu et place de l'objet graphique dans sa représentation initiale. Selon une caractéristique particulière, si l'utilisateur décide de stopper le processus de rotation, la dernière information affichée (quel que soit le niveau d'information de celle-ci) occupe la place de l'information affichée par l'objet graphique dans sa représentation initiale. Ainsi, l'utilisateur peut par exemple décider du niveau d'information qu'il souhaite voir afficher.

### 5.3 Navigation dans un processus séquentiel

Les modes de réalisation précédemment décrits visaient à permettre l'affichage d'informations complémentaires, lorsque le terminal est incliné par rapport à son plan de référence. Les caractéristiques préalablement décrites en relation avec ces modes de réalisation permettent également de mettre en oeuvre un mode de réalisation (non représenté) dans lequel l'inclinaison du terminal est utilisée pour réaliser une navigation ou un affichage d'étapes dans un processus séquentiel. Un processus séquentiel comprend en règle générale un certain nombre d'étapes qui permettent d'aboutir à un résultat. Un tel processus séquentiel peut par exemple être une recette de cuisine. Pour réaliser une recette de cuisine, il convient d'enchaîner plusieurs étapes de réalisation pour obtenir un plat cuisiné. Le processus séquentiel peut également être un ensemble d'étapes permettant de réaliser une maintenance ou une réparation d'un objet.

Dans ce mode de réalisation, décrit pour les recettes de cuisine, un objet graphique dans un état initial comporte une information de niveau 0. Cet objet graphique est une application, par exemple un widget, comprenant des recettes de cuisines. Lorsque l'utilisateur incline son terminal, par exemple vers la gauche, une liste des types de recettes de cuisines apparaît (entrée, plat, dessert), par exemple selon l'un des modes de réalisation des figures 2 ou 3 ou selon une autre méthode d'affichage. Les types de recettes sont disponibles dans une liste. Dans cet exemple, l'inclinaison a pour conséquence l'affichage de trois niveaux d'information (niveau 1 : entrée, niveau 2 : plat, niveau 3 : desserts).

L'utilisateur sélectionne l'un des types de recette, par exemple en inclinant son terminal vers le bas. Cette action correspond à la sélection d'un niveau d'information donné et déclenche la sélection de celui-ci. Une fois le type de recette sélectionné, une nouvelle inclinaison du terminal, par exemple vers la gauche, déclenche l'apparition des catégories de recette dans le type sélectionné, par exemple selon l'un des modes de réalisation des figures 2 ou 3 ou selon une autre méthode d'affichage. Il peut s'agir par exemple des types de dessert : gâteaux, tartes, glaces, etc. Les types de desserts sont disponibles dans une liste. Dans cet exemple, l'inclinaison a pour conséquence l'affichage de trois niveaux d'information (niveau 1 : gâteaux, niveau 2 : tartes, niveau 3 : glaces).

L'utilisateur sélectionne l'un des types de dessert, par exemple en inclinant son terminal vers le bas. Cette action correspond à la sélection d'un niveau d'information donné et déclenche la sélection de celui-ci. Une fois le type de dessert sélectionné, une nouvelle inclinaison du terminal, par exemple vers la gauche, déclenche l'apparition des recettes de dessert dans le type sélectionné.

Selon le même principe que celui décrit préalablement, l'utilisateur sélectionne une recette particulière, puis affiche, en inclinant le terminal, les étapes qui permettent de réaliser cette recette. Une inclinaison du terminal vers la gauche aura pour conséquence l'affichage de l'étape suivante de la recette tandis qu'une inclinaison vers la droite permettra de faire apparaître l'étape précédente.

Ce mode de réalisation a été décrit à l'aide d'un exemple portant sur des recettes de cuisine. Il est bien évident que d'autres types de processus séquentiels peuvent être envisagés.

## Revendications

1. Procédé de restitution d'informations sur un écran (101) d'un terminal (10) comprenant un espace d'affichage (102) sur lequel est affiché un objet graphique (103) dans une représentation initiale (*rI*), ledit objet graphique se référant à une application, ledit procédé de restitution comprenant :
- une étape d'obtention (EOI) d'au moins une donnée d'inclinaison (*i*) dudit terminal (10) par rapport à un plan de référence ;
- une étape de sélection (ESI) d'au moins une information, parmi une pluralité d'informations à restituer (*PIR*), en fonction de ladite donnée d'inclinaison obtenue, délivrant au moins une information sélectionnée (IS);
- une étape de transformation (ETR) de ladite représentation initiale (*rI*) en une représentation modifiée (*rM*) comprenant ladite au moins une information sélectionnée (*IS*);
- une étape de restitution (ERR) de ladite représentation modifiée (*rM*) dudit objet graphique (103),
**caractérisé en ce que** l'étape de transformation (ETR) de ladite représentation initiale (*rI*) comprend :
- une étape de détermination d'un nombre d'informations sélectionnées ;
- une étape de création d'un nombre équivalent d'ombres portées comprenant chacune une desdites informations sélectionnées ;
- une étape de superposition de ladite représentation initiale avec lesdites ombres portées préalablement créées, délivrant ladite représentation modifiée.

2. Procédé de restitution selon la revendication 1, **caractérisé en ce que** ledit objet graphique (103) est une icône d'accès à ladite application.

3. Procédé de restitution selon la revendication 1, **caractérisé en ce que** ladite étape de sélection (ESI) d'au moins une information comprend une étape de détermination d'un niveau d'information délivrant un nombre d'informations à sélectionner en fonction de ladite donnée d'inclinaison obtenue et d'au moins un paramètre prédéterminé.

4. Procédé de restitution selon la revendication 1, **caractérisé en ce que** ladite étape de restitution (ERR) de ladite représentation modifiée dudit objet graphique est mise en oeuvre durant une période temporelle prédéterminée.

5. Procédé de restitution selon la revendication 1, **caractérisé en ce qu'**il comprend une étape de calcul d'une direction d'inclinaison dudit terminal en fonction de ladite au moins une donnée d'inclinaison dudit terminal par rapport audit plan de référence.

6. Procédé de restitution selon la revendication 5, **caractérisé en ce que** ladite direction d'inclinaison dudit terminal définit une direction temporelle de sélection de ladite au moins une information parmi ladite pluralité d'informations à restituer.

7. Procédé de restitution selon la revendication 5, **caractérisé en ce que** ladite direction d'inclinaison dudit terminal définit un classement alphabétique de sélection de ladite au moins une information parmi ladite pluralité d'informations à restituer.

8. Dispositif de restitution d'informations sur un écran d'un terminal, ledit terminal comprenant un espace d'affichage sur lequel est affiché un objet graphique dans une représentation initiale, ledit objet graphique se référant à une application, ledit dispositif de restitution comprenant :
- des moyens d'obtention d'au moins une donnée d'inclinaison dudit terminal par rapport à un plan de référence ;
- des moyens de sélection d'au moins une information, parmi une pluralité d'informations à restituer, en fonction de ladite donnée d'inclinaison, délivrant au moins une information sélectionnée ;
- des moyens de transformation de ladite représentation initiale en une représentation modifiée comprenant ladite au moins une information sélectionnée ;
- des moyens de restitution de ladite représentation modifiée dudit objet graphique,
**caractérisé en ce que** les moyens de transformation de ladite représentation initiale comprend :
- des moyens de détermination d'un nombre d'informations sélectionnées ;
- des moyens de création d'un nombre équivalent d'ombres portées comprenant chacune une desdites informations sélectionnées ;
- des moyens de superposition de ladite représentation initiale avec lesdites ombres portées préalablement créées, délivrant ladite représentation modifiée.

9. Terminal comprenant un dispositif de restitution selon la revendication 8.

10. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé de restitution d'informations selon l'une au moins des revendications 1 à 7, lorsqu'il est exécuté sur un ordinateur.

## Patentansprüche

1. Verfahren zur Wiederherstellung von Informationen auf einem Bildschirm (101) eines Endgeräts (10), umfassend einen Anzeigebereich (102), auf dem ein grafisches Objekt (103) in einer anfänglichen Darstellung (*r1*) angezeigt wird, wobei sich das grafische Objekt auf eine Anwendung bezieht, wobei das Verfahren zur Wiederherstellung Folgendes aufweist:
- einen Schritt zum Erhalten (EOI) von mindestens einem Datum der Neigung (i) des Endgeräts (10) gegenüber einer Referenzebene;
- einen Schritt des Auswählens (ESI) von mindestens einer Information aus mehreren wiederherzustellenden Informationen (*PIR*) in Abhängigkeit von dem erhaltenen Datum der Neigung, der mindestens eine ausgewählte Information (*IS*) bereitstellt;
- einen Schritt des Umwandelns (ETR) der anfänglichen Darstellung (*rI*) in eine geänderte Darstellung (*rM*), umfassend die mindestens eine ausgewählte Information (*IS*);
- einen Schritt des Wiederherstellens (ERR) der geänderten Darstellung (rM) des grafischen Objekts (103),
**dadurch gekennzeichnet, dass** der Schritt des Umwandelns (ETR) der anfänglichen Darstellung (*rI*) Folgendes aufweist:
- einen Schritt des Bestimmens von einer Anzahl an ausgewählten Informationen;
- einen Schritt des Erstellens von einer gleichen Anzahl an Schlagschatten, die jeweils eine der ausgewählten Informationen aufweisen;
- einen Schritt des Überlagerns der anfänglichen Darstellung mit den zuvor erstellten Schlagschatten, der die geänderte Darstellung bereitstellt.

2. Verfahren zur Wiederherstellung nach Anspruch 1, **dadurch gekennzeichnet, dass** das grafische Objekt (103) ein Zugriffssymbol auf die Anwendung ist.

3. Verfahren zur Wiederherstellung nach Anspruch 1, **dadurch gekennzeichnet, dass** der Schritt des Auswählens (ESI) von mindestens einer Information einen Schritt des Bestimmens von einem Informationsniveau aufweist, der eine Anzahl von auszuwählenden Informationen in Abhängigkeit von dem erhaltenen Datum der Neigung und von mindestens einem vorbestimmten Parameter bereitstellt.

4. Verfahren zur Wiederherstellung nach Anspruch 1, **dadurch gekennzeichnet, dass** der Schritt des Wiederherstellens (ERR) der geänderten Darstellung des grafischen Objekts während einer vorbestimmten Zeitperiode umgesetzt wird.

5. Verfahren zur Wiederherstellung nach Anspruch 1, **dadurch gekennzeichnet, dass** es einen Schritt des Berechnens von einer Neigungsrichtung des Endgeräts in Abhängigkeit von dem mindestens einen Datum der Neigung des Endgeräts in Bezug auf die Referenzebene aufweist.

6. Verfahren zur Wiederherstellung nach Anspruch 5, **dadurch gekennzeichnet, dass** die Neigungsrichtung des Endgeräts eine zeitliche Richtung des Auswählens der mindestens einen Information aus den mehreren wiederzugebenden Informationen definiert.

7. Verfahren zur Wiederherstellung nach Anspruch 5, **dadurch gekennzeichnet, dass** die Neigungsrichtung des Endgeräts eine alphabetische Anordnung des Auswählens der mindestens einen Information aus den mehreren wiederherzustellenden Informationen definiert.

8. Vorrichtung zur Wiederherstellung von Informationen auf einem Bildschirm eines Endgeräts, wobei das Endgerät einen Anzeigebereich aufweist, auf dem ein grafisches Objekt in einer anfänglichen Darstellung angezeigt ist, wobei sich das grafische Objekt auf eine Anwendung bezieht, wobei die Vorrichtung zur Wiederherstellung Folgendes aufweist:
- Mittel zum Erhalten von mindestens einem Datum der Neigung des Endgeräts gegenüber einer Referenzebene;
- Mittel zum Auswählen von mindestens einer Information aus mehreren wiederherzustellenden Informationen in Abhängigkeit von dem erhaltenen Datum der Neigung, die mindestens eine ausgewählte Information bereitstellen;
- Mittel zum Umwandeln der anfänglichen Darstellung in eine geänderte Darstellung, umfassend die mindestens eine ausgewählte Information;
- Mittel zum Wiederherstellen der geänderten Darstellung des grafischen Objekts,
**dadurch gekennzeichnet, dass** die Mittel des Umwandelns der anfänglichen Darstellung Folgendes aufweisen:
- Mittel zum Bestimmen von einer Anzahl an ausgewählten Informationen;
- Mittel zum Erstellen von einer gleichen Anzahl an Schlagschatten, die jeweils eine der ausgewählten Informationen aufweisen;
- Mittel zum Überlagern der anfänglichen Darstellung mit den zuvor erstellten Schlagschatten, die die geänderte Darstellung bereitstellen.

9. Endgerät, umfassend eine Vorrichtung zur Wiederherstellung nach Anspruch 8.

10. Computerprogrammprodukt, das von einem Kommunikationsnetzwerk heruntergeladen und/oder auf einem computerlesbaren Medium gespeichert und/oder von einem Mikroprozessor ausgeführt werden kann, **dadurch gekennzeichnet, dass** es Programmcodebefehle für die Ausführung des Verfahrens zur Wiederherstellung von Informationen nach mindestens einem der Ansprüche 1 bis 7 aufweist, wenn es von einem Computer ausgeführt wird.

## Claims

1. Method for rendering information on a screen (101) of a terminal (10) comprising a display space (102) on which a graphical object (103) is displayed in an initial representation (*rI*), said graphical object relating to an application, said rendering method comprising:
- a step (EOI) of obtaining at least one datum (*i*) on the inclination of said terminal (10) with respect to a reference plane;
- a step (ESI) of selecting at least one item of information, from a plurality of items of information to be rendered (*PIR*), according to said obtained inclination datum, delivering at least one selected item of information (IS);
- a step (ETR) of transforming said initial representation (*rI*) into a modified representation (*rM*) comprising said at least one selected item of information (*IS*);
- a step (ERR) of rendering said modified representation (*rM*) of said graphical object (103),
**characterized in that** the step (ETR) of transforming said initial representation (*rI*) comprises:
- a step of determining a number of selected items of information;
- a step of creating an equivalent number of cast shadows, each comprising one of said selected items of information;
- a step of superposing said initial representation with said previously created cast shadows, delivering said modified representation.

2. Rendering method according to Claim 1, **characterized in that** said graphical object (103) is an icon for accessing said application.

3. Rendering method according to Claim 1, **characterized in that** said step (ESI) of selecting at least one item of information comprises a step of determining a level of information delivering a number of items of information to be selected according to said obtained inclination datum and to at least one predetermined parameter.

4. Rendering method according to Claim 1, **characterized in that** said step (ERR) of rendering said modified representation of said graphical object is implemented during a predetermined time period.

5. Rendering method according to Claim 1, **characterized in that** it comprises a step of calculating a direction of inclination of said terminal according to said at least one datum on the inclination of said terminal with respect to said reference plane.

6. Rendering method according to Claim 5, **characterized in that** said direction of inclination of said terminal defines a temporal direction of selection of said at least one item of information from said plurality of items of information to be rendered.

7. Rendering method according to Claim 5, **characterized in that** said direction of inclination of said terminal defines an alphabetical order of selection of said at least one item of information from said plurality of items of information to be rendered.

8. Device for rendering information on a screen of a terminal, said terminal comprising a display space on which a graphical object is displayed in an initial representation, said graphical object relating to an application, said rendering device comprising:
- means for obtaining at least one datum on the inclination of said terminal with respect to a reference plane;
- means for selecting at least one item of information, from a plurality of items of information to be rendered, according to said inclination datum, delivering at least one selected item of information;
- means for transforming said initial representation into a modified representation comprising said at least one selected item of information;
- means for rendering said modified representation of said graphical object,
**characterized in that** the means for transforming said initial representation comprises:
- means for determining a number of selected items of information;
- means for creating an equivalent number of cast shadows, each comprising one of said selected items of information;
- means for superposing said initial representation with said previously created cast shadows, delivering said modified representation.

9. Terminal comprising a rendering device according to Claim 8.

10. commuter program product that can be downloaded from a communication network and/or stored on a medium that can be read by computer and/or run by a microprocessor, **characterized in that** it comprises program code instructions for running the information rendering method according to at least one of Claims 1 to 7, when it is run on a computer.
